# EUROPEAN PATENT APPLICATION

(11) **EP 4 345 765 A1**
(43) Date of publication of application: **03.04.2024**
(21) Application number: 22275130.7
(22) Date of filing: 28.09.2022
(51) Int. Cl.: G06V 10/22, G06V 10/20, G06V 20/20

(54) **MODIFYING IMAGES OF AN ENVIRONMENT**

(71) Applicant: BAE SYSTEMS plc, London SW1Y 5AD (GB)
(72) Inventor: DANIEL, Kristian, Warton, Lancashire PR4 1AX (GB); KURTIS, Ashley Anthony, Warton, Lancashire PR4 1AX (GB)
(74) Representative: BAE SYSTEMS plc Group IP Department

(57) **Abstract**

A computer-implemented method of modifying images of an environment for storage or transmission comprises receiving (204; 404; 604, 608) user input defining at least one selected feature of, or within, an environment. An image of a portion of the environment is captured (212; 410; 614) using an image capture device. The method can identify (216; 414; 618, 622) at least one object and/or at least one area in the image based on the at least one selected feature, and modify (218; 416; 624) the image to include or exclude the at least one identified object and/or the at least one identified area. The modified image can be stored or transmitted (220; 418, 420; 626, 628).

## Description

The present invention relates to image processing, and in particular to modifying images of an environment for storage or transmission.

There is an increasing trend towards taking advantage of remote working in the context of hardware maintenance and other operations. This allows tapping into the knowledge of experts who may not be able to be physically present where the hardware is located using a video call or the like. However, security measures at certain environments or sites where sensitive hardware is located may restrict use of camera/video recording devices in order to prevent unauthorised personnel from seeing images of the hardware.

A known solution to this problem is to take physical steps to obstruct security-sensitive areas/objects in order to prevent them from being inadvertently captured on camera, e.g. move objects out of the likely line of sight of the camera, or cover them using sheets of material or some other way. However, these conventional methods can be unreliable, inconvenient and time-consuming.

Embodiments of the present invention are intended to address at least some of the above technical problems.

Some embodiments can offer integration of a "virtual shroud" that allows the operator of a camera/video device to operate in security-sensitive environments without physical steps having to be taken to obstruct sensitive areas/objects. The operator of the camera/video device will typically have security clearance to view materials in the background of the environment, but the individual(s) on the other end of the video call (or recipient(s) of recorded video material) might not. Embodiments can therefore provide the operational time and costs advantages offered by remote viewing and discriminate in real time what is shown in the transmitted video, e.g. by obscuring or blurring out features or backgrounds to which security constraints apply. Embodiments can be applied widely across a range of product areas.

Embodiments can provide the operator of a camera/video device the ability to present a specific object/environment to a recipient (either via a video call or via a previously captured image/video) with the ability to obscure at least part of the surrounding environment in real time when capturing the images. The virtual shroud/box can be placed manually by the end user of the camera/video device in the environment prior to the call being made. Alternatively, the device may use object recognition to understand which object(s) it can and can't remotely display/store and then obscure parts of the object(s)/environment that aren't recognized with the use of a pixilated/blur filter, again prior to the video call or long-term/non-volatile storing for subsequent and/or remote viewing taking place. The operator of the camera/video device will still be able to see the environment in which they were working free from any visual obstruction(s), but the recipient of the call, the captured image or previously recorded footage will instead see the virtual shroud/box obscuring any content that isn't supposed to be viewed remotely or subsequently.

According to a first aspect of the present invention there is provided a computer-implemented method of modifying images of an environment for storage or transmission, the method comprising:
receiving user input defining at least one selected feature of, or within, an environment;
capturing an image of a portion of the environment using an image capture device;
identifying at least one object and/or at least one area in the image based on the at least one selected feature;
modifying the image to include or exclude the at least one identified object and/or the at least one identified area, and
storing or transmitting the modified image.

The selected feature may comprise a user-defined area within the environment. The user input may define boundaries of the user-defined area.

The step of modifying the image may comprise:
determining whether the image contains at least part of at least one of the boundaries, and
adding a graphical component, such as a holographic wall, to the at least part of at least one of the boundaries to the image to obscure features located on a far side of the boundary (with respect to a point of view of the image capture device).

The method may further comprise:
determining whether a device capturing the image is located within the user-defined area when the image is captured, and
if the device is not located within the user-defined area, modifying the image to obscure captured features, e.g. replacing the image with a blank/solid frame.

The selected feature may comprise an object within the environment that is selected as a recognised object. The method may comprise accessing data representing a digital twin of the recognised object that includes data regarding a plurality of components of the recognized object. The data regarding the plurality of components may indicate whether each of the plurality of components is restricted. The digital twin data may be updated, e.g. whenever a sensor (which may comprise the image capture device) detects that one of the plurality of components is added to, or removed from, the recognized object (typically substantially in real time).

The method may further comprise:
checking (e.g. using the digital twin data) whether the image contains one or more of the components of the recognized object that are restricted, and
modifying the image to obscure the restricted one or more restricted components, e.g. replace with a blank/solid colour or blur.

The method may further comprise:
obscuring any further area(s) of the image not containing the recognised object.

The method may comprise transmitting the modified image to a second device, e.g. streaming using a communications interface or via a video call link. The transmitted modified image may be encrypted and/or compressed.

The environment may comprise a secure environment containing sensitive hardware, such as a land, water or air vehicle.

According to another aspect of the present invention there is provided apparatus configured to modify images of an environment for storage or transmission, the apparatus comprising:
an image capturing device, and
a processor,
wherein the processor is configured to:
   receive user input defining at least one selected feature of, or within, an environment;
   capture an image of a portion of the environment using the image capture device;
   identify at least one object and/or at least one area in the image based on the at least one selected feature;
   modify the image to include or exclude the at least one identified object and/or the at least one identified area, and
   store or transmit the modified image.

The apparatus may comprise, or be located in/on (or be in communication with), a Virtual Reality or Augmented Reality headset.

According to another aspect of the present invention there is provided a system comprising:
a first apparatus comprising apparatus substantially as defined herein, and
a second apparatus comprising a processor, a communications interface, and a display.

According to another aspect there is provided a computer program product comprising instructions which, when the program is executed by a computer, cause the computer to carry out methods substantially as described herein.

### BRIEF DESCRIPTION OF THE FIGURES

For a better understanding of the invention, and to show how embodiments of the same may be carried into effect, reference will now be made, by way of example, to the accompanying diagrammatic drawings in which:
Figure 1 is a block diagram of an example system including a transmission device and a receiving device;
Figure 2 is a flowchart showing example steps performed by a first embodiment;
Figure 3A is a plan view of an example environment including a user-defined area processed by the first embodiment;
Figure 3B is a partial perspective view of the environment of Figure 3A;
Figure 4 is a flowchart showing example steps performed by a second embodiment;
Figure 5 is an example of an image that can be transmitted by the second embodiment, and
Figure 6 is a flowchart showing example steps performed by a third embodiment.

### DETAILED DESCRIPTION OF THE FIGURES

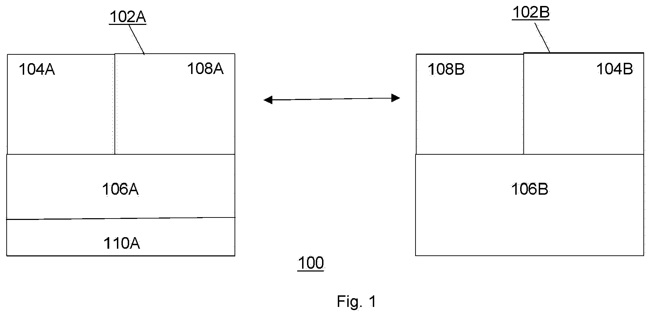

Figure 1 is a block diagram of an example system 100. The example system comprises a transmission device 102A and a receiver device 102B. Although only one transmission device and one receiver device are shown in the Figure for brevity, it will be appreciated that two or more of either or both devices may be used in alternative embodiments.

In general, the transmission device 102A will comprise a computing device including, or associated with, at least one processor 104A and internal memory 106A, e.g. Random Access Memory. The internal memory can store data and instructions for processing by the processor(s). The device can further comprise, or be associated with, an interface 108A that allows communication with other devices, e.g. via any suitable wired/wireless interface and/or communications network. The device may also include, or be associated with, further conventional features, such as a display, a non-volatile storage device(s), a user interface, and so on, which need not be described herein in detail.

The transmission device 102A can further comprises, or be in communication with, an image capturing device 110A, which can include a still image or video camera, for example. In some embodiments the transmission device comprises a Virtual Reality or Augmented Reality headset, such as Microsoft HoloLens 2^{™}. Such headsets include sensors, such as accelerometers, for determining user location/movement as well as at least one image capturing device. In alternative embodiments the transmission device may include VR glasses, or a mobile computing device, such as a smartphone or tablet computer that include sensors and one or more image capturing device that can be used in VR/AR.

The receiver device 102B also comprises a computing device that includes, or is associated with, at least one processor 104B and internal memory 106B, as well as a communications interface 108B. Again, the receiver device may also include, or be associated with, further conventional features, such as such as a display, a non-volatile storage device(s), a user interface, and so on. In some embodiments the receiver device comprises a desktop or laptop computer, or it may comprise a mobile computing device, such as a smartphone or tablet computer.

In a typical use case, the user of the transmission device 102A will be located in an environment containing at least one object, e.g. a piece of technical equipment, that a user of the receiver device 102B is to view remotely. The environment may also contain at least one feature that should not be included in transmitted images. This may be for various reasons, such as privacy or commercial or military security. The at least one feature may comprise at least one area of the environment and/or at least one other object (or part(s) thereof) in the environment. For example, the restricted object may include any object other than the piece(s) of equipment that is to be the main subject of discussion between the users of the devices.

In the detailed embodiments described below, the user of the receiver device 102B may view images captured and modified by the transmission device 102A substantially in real-time during communication between the devices, e.g. via a video call or the like. Alternatively or additionally, it will be understood that in other embodiments the user of the transmission device may capture and modify images and store them for subsequent transfer to the receiver device in a non-real time manner, e.g. data (possibly encrypted and/or compressed) containing the modified images are transferred to the receiver device by means of file transfer using a removable storage device, secure email, etc. The user of the receiver device can then view them using a gallery or video player application or the like.

Embodiments provide instructions for execution by the transmission device 102A that, prior to transmission and/or storage for future remote viewing, modify captured images so that they do not contain excluded/non-permitted feature(s). In general terms, embodiments can achieve this by receiving user input defining at least one selected feature of, or within, an environment; capturing an image of a portion of the environment using an image capture device; identifying at least one object and/or at least one area in the image based on the at least one selected feature; modifying the image to include or exclude the at least one identified object and/or the at least one identified area, and storing or transmitting the modified image.

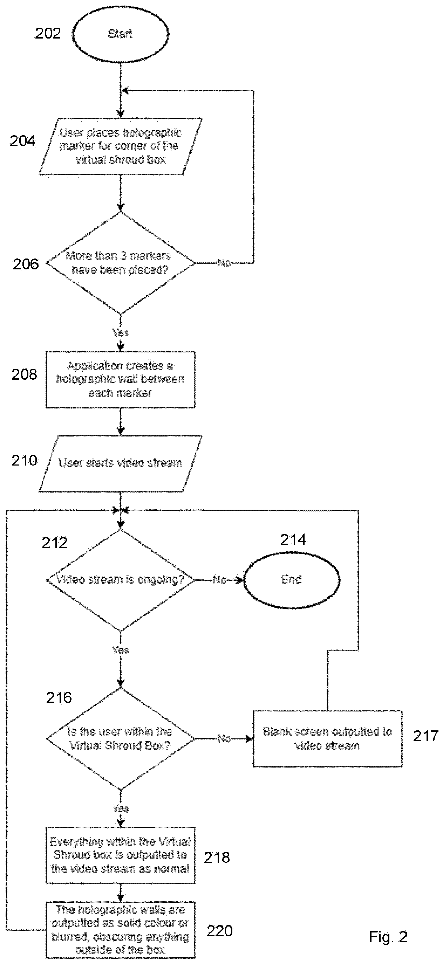

Figure 2 is a flowchart showing steps performed by a first example embodiment. This embodiment can place a 'virtual box' around selected features/subject matter in the environment such that the outputted/transmitted image/video will have the box overlaid on the top of the final transmitted image/footage to obscure non-permitted features.

At step 202 the process is initiated. This may involve a user of the transmission device 102A executing a secure communications application according to an embodiment, or executing a video call application that cooperates with an application according to an embodiment.

At step 204, the application receives user input defining boundaries of at least one selected area of the environment.

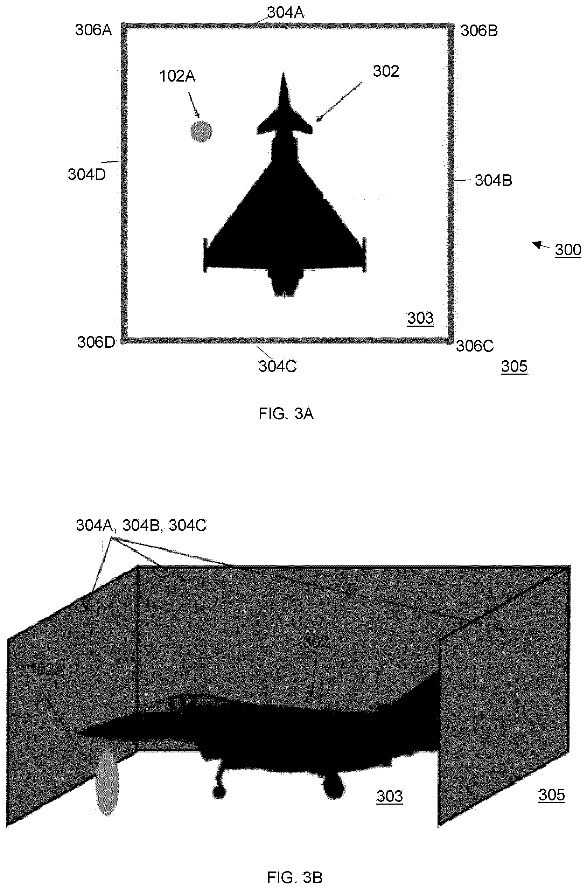

Referring to Figure 3A, there is shown is a plan view of an example environment 300 that comprises an object 302 that is to be the subject of secure communication between users of the transmission device 102A and the receiver device 102B. Embodiments can modify images to obscure features that are in the environmental background with respect to the object so that they are effectively excluded from transmitted/stored images. The terms "environment" and "object" should be interpreted broadly. For instance, the environment may comprise any indoor or outdoor space, and in the illustrated example the object comprises an aircraft 302. However, it will be appreciated that these are merely examples and many variations are possible, e.g. the object may comprise one or more piece of any technical equipment/hardware or the like. The transmission device 102A as worn/held by its user is also shown in proximity to the aircraft.

As detailed below, embodiments of the application being executed by the transmission device 102A allow the user to define a selected area 303 of the environment 300 by selecting coordinates that define the boundaries of the area. In some embodiments the coordinates are selected by the user placing markers representing 3-dimensional coordinates, such as holographic markers provided by Microsoft HoloLens 2^{™}, within the environment. In such embodiments the markers will be 3D Holograms that are visualised by the HoloLens^{™}. The holographic markers will be placed by the user grabbing and moving them through the use of the HoloLens^{™} hand-tracking systems. The HoloLens will then be able to spatially track the markers' position in relation to itself.

Returning to Figure 2, at step 206 the embodiment can check whether a minimum number of markers necessary for defining a selected area have been placed by the user. In the example the minimum number is four, which allows a quadrilateral-shaped boundary to be defined, as shown by four walls 304A - 304D in Figure 3A. However, it will be understood that an alternative minimum number can be used to allow the selected area to have a different (e.g. closed or non-closed) shape.

In the example embodiment, the boundary defines a selected area 303 or "box" in the environment 300. Any feature, e.g. a part of the environment or an object, within the selected area can be included in transmitted images, whilst the outside of the boundary is considered an excluded/non-permitted area 305. Any feature in the excluded/non-permitted area 305 should not be included in modified images that are transmitted (and/or stored for future use). In alternative embodiments, the user selection of the selected area may differ. For example, the inside of the boundary may define an excluded area, rather than a permitted area. Further, the user definition can indicate features to be excluded from transmitted images in an indirect manner (e.g. by only selecting permitted features).

If the minimum number of markers have been set by the user then control passes to step 208, where embodiments create a "holographic wall" between each of the markers. This can be done on devices that have the capability to import 3D objects into their displays, such as Microsoft HoloLens 2^{™}. For instance, the locations where the holographic walls are placed in relation to the camera view will be rendered as solid or blurred onto the video feed. This can be done as the HoloLens 2^{™} knows spatially where it is in relation to the Holographic walls.

The holographic walls may create a quadrilateral selected area that is defined by a first wall 304A between first 306A and second markers 306B; a second wall 304B between the second 306B and third 306C markers; a third wall 304C between the third 306C and fourth 306D markers, and a fourth wall 304D between the fourth and the first markers. At least part of all/some of the holographic walls will be included in modified images produced by embodiments in order to obscure features of the environment 300 outside the selected area 303.

For illustrative purposes, Figure 3B shows how the holographic walls 304A - 304C can obscure features in the background areas 305 of the environment when the user of the transmission device 102A is capturing images of the aircraft 302 within the selected area 303. The further holographic wall 304D (located behind the field of view of the transmission device) is not shown for clarity.

At step 210 the user of the transmission device 102A starts communication with the receiver device 102B. This can involve the secure communication application and/or the video call application creating a video stream from the transmission device to the receiver device, which is configured with appropriate application/software for the communication. The video stream may be encrypted and/or compressed using any suitable techniques available to the transmission and receiver devices. For example, a video call can be set up using TLS (Transport Layer Security) and then the imagemedia is transferred via SRTP (Secure Real-time Transport Protocol).

At step 212 a check is performed as to whether the video stream is ongoing, e.g. that a user of one of the devices 102A, 102B has not terminated the call. If the stream is not ongoing then operation ends at step 214; otherwise, control passes to step 216.

At the step 216 embodiments can check whether the transmission device 102A is located within the selected area 303. This can be done using sensor components of the device that allow it to be spatially aware of its environment. For instance, in embodiments that use the HoloLens 2^{™}, the device's inside-out tracking capability can determine its position in space. If the device is not within the selected area then this means that the image captured by the device can comprise non-permitted features of the environment that should be excluded from transmitted images. Control therefore passes to step 217, where a blank frame is outputted to the video stream instead of the captured image. In alternative embodiments, a different method of obscuring non-permitted features can be used, e.g. blurring, superimposing other graphical elements, etc.

On the other hand, if the check of the step 216 indicates that the transmission device 102A is located within the selected area 303 then this means that at least some features in an image captured by the device can be transmitted and control passes to step 218. At the step 218 the image is captured and includes features that are allowed to be included for transmission. At step 220 the image is modified to render part or all of the appropriate holographic wall(s) 304A - 304D in relation to the camera view before transmission. The image is then transmitted to the receiver device 102B and control can then loop back to step 212.

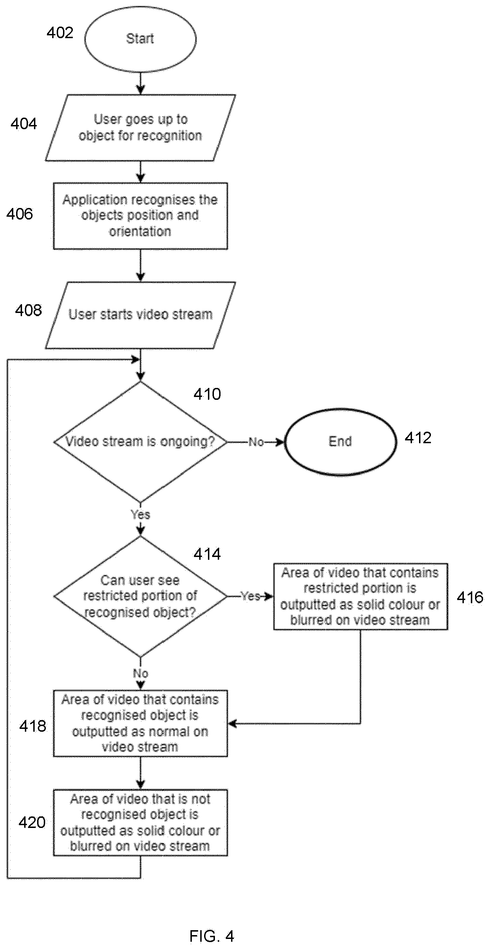

Figure 4 is a flowchart showing steps performed by a second example embodiment. This embodiment can recognise particular object(s) through the transmission device's 102A in-built camera and object recognition capability and can obscure other unrecognized objects/features around the object(s) with the use of a pixilation/blurriness/colour filter or the like.

At step 402 the process is initiated. Again, this may involve a user of the transmission device 102A executing a secure communications application according to an embodiment, or a video call application that cooperates with a separate application according to an embodiment.

At step 404, the user of the transmission device 102A selects an object in the environment. In this detailed embodiment, the selected object is to be included in images transmitted by the device, although in alternative embodiments the selected object(s) may be intended to be excluded instead. The user may do this by moving the device towards an object (such as the aircraft 302 of Figure 3A) and providing a user input, such as a gesture or icon selection, to indicate that they are selecting that object.

At step 406 the application recognizes the position and orientation of the selected object. In some embodiments this can be done by performing image analysis on the camera feed to see if the selected object is in frame and what its orientation is. Alternatively, a QR code, or the like, on the object may be used. As another alternative, the user could align a hologram of the object with the real object itself.

The application can reference data representing a digital twin of the recognised object, enabling it to know if a captured image comprises a restricted portion of the object. For example, the object recognition capability of the transmission device 102A can be made aware that a panel of the object is removed, meaning that a component A (Restricted) is now visible. Work done on the aircraft, such as removing a panel, is recorded within a database. This may be done automatically (e.g. using image recognition or sensors detecting that components having RFID tags or the like are removed) or may be manually updated. Thus, the database essentially records every component that is and isn't on the aircraft/object at given a moment in time. The database can form part of the digital twin data. The other part of the digital twin will be a 3D representation of the aircraft/object that show the locations of the components on the aircraft, and indicates whether or not they are restricted. In this way the application can consume the information and determine if a restricted component is still on the aircraft or not, and if it is within the FOV of the camera.

The steps 404 and 406 may be repeated if more than one object is to be selected.

At step 408 the user of the transmission device 102A starts communication with the receiver device 102B. This can involve the secure communication application and/or the video call application creating a video stream from the transmission device to the receiver device.

At step 410 a check is performed as to whether the video stream is ongoing, e.g. that a user of one of the devices 102A, 102B has not terminated the call. If the stream is not ongoing then operation ends at step 412; otherwise, control passes to step 414.

At the step 414 embodiments can check whether the image captured by the transmission device 102A contains one or more component of the recognized object that are restricted, e.g. using the digital twin database. If so then control passes to step 416, where any portion of the image that contains a restricted component of the recognized object is modified so as to be obscured, e.g. replaced by a blank/solid colour or blurred. After step 414 or 416 control passes to step 418, where the image is prepared for transmission to the receiver device 102B. Any portion(s) of the image that contain a restricted component(s) of the recognized object(s) will have been modified at the step 416 to obscure the restricted matter, whilst any portion(s) of the image that contain only non-restricted component(s) of the recognized object(s) are not obscured.

At step 420 the image may be further modified so that any area of it that does not contain the recognised object(s) is obscured, e.g. replaced by a blank/solid colour or blurred. For instance, in embodiments that use the HoloLens^{™}, the device knows where it is spatially in relation to the recognised object, and so any feature captured by the camera that isn't the object can be rendered as solid colour, blurred, etc.

The image is transmitted to the receiver device 102B and control can then loop back to step 410.

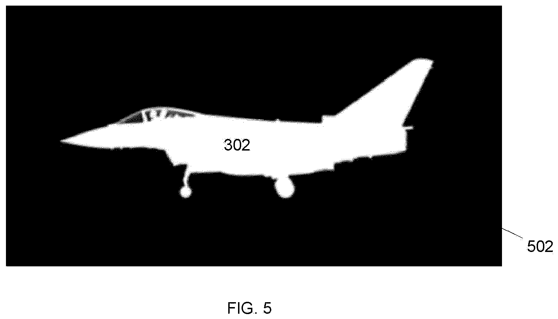

Figure 5 is an example of an image modified and transmitted by the embodiment of Figure 4. The recognized object comprises all or some of the selected object, e.g. aircraft 302, as captured by the transmission device 102A. The Figure shows the video feed from the perspective of the user of the transmission device/headset with the recognized object 302 being shown in white. Any part of the video that does not comprise the recognized object(s) has a pixilation/blurriness/colour filter applied (solid black 502 in the example). In this case the headset can recognise the selected object(s) and only render the parts of the image that comprise the selected object(s).

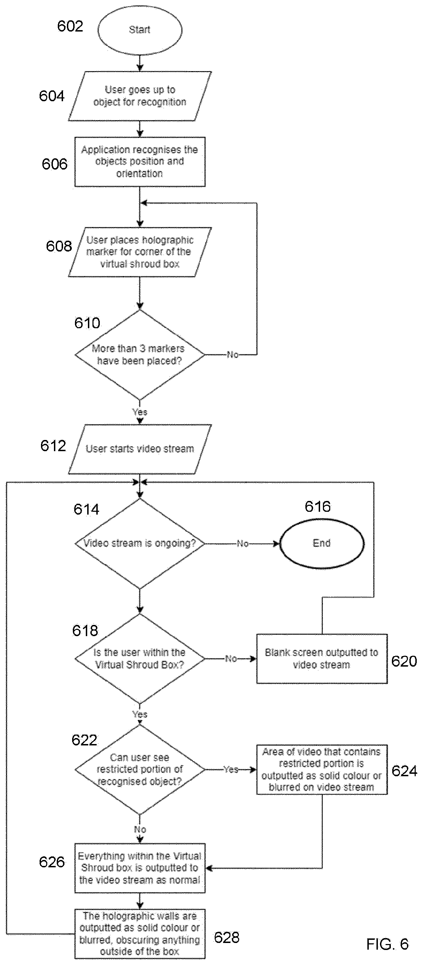

Figure 6 is a flowchart showing steps performed by a third example embodiment, which combines techniques from the first and the second embodiment and at least some of the steps are substantially identical to those disclosed above. The application being executed by the transmission device 102A may allow the user to select one of the first to third embodiments, or may only comprise one of them.

At step 602 the process is initiated. Again, this may involve a user of the transmission device 102A executing a secure communications application according to an embodiment, or a video call application that cooperates with a separate application according to an embodiment.

At step 604, the user of the transmission device 102A selects one or more object that is to be included in images transmitted by the device. The user may do this by moving towards an object and providing a user input such as a gesture or icon selection to indicate that they are selecting that object. At step 606 the application recognizes the object's position and orientation. The steps 604 and 606 may be repeated if more than one object is selected.

At step 608, the application receives user input defining boundaries of at least one selected area within the environment. At step 610 the embodiment can check whether a minimum number of markers necessary for defining the excluded area have been placed by the user. If the minimum number of markers have been set by the user then control passes to step 612.

At the step 612 the user of the transmission device 102A starts communication with the receiver device 102B. This can involve the secure communication application and/or the video call application creating a video stream from the transmission device to the receiver device.

At step 614 a check is performed as to whether the video stream is ongoing, e.g. that a user of one of the devices has not terminated the call. If the stream is not ongoing then operation ends at step 616; otherwise, control passes to step 618.

At the step 618 embodiments can check whether the transmission device 102A is located within the selected area. This can be done using sensor components of the device. If the device is not within the selected area then this means that the image captured by the device may comprise features that should be excluded and control therefore passes to step 620, where a blank frame is outputted to the video stream instead of the captured image. On the other hand, if the device is located within the selected area then this means that features in an image captured by the device are permitted for transmission and control passes to step 622.

At the step 622 embodiments can check whether the image captured by the transmission device 102A contains one or more components of the recognized object that are restricted. If so then control passes to step 624, where any portion of the image that contains a restricted component of the recognized object is modified so as to be obscured/excluded, e.g. replaced by a blank/solid colour or blurred. After step 622 or 624 control passes to step 626, where the image is prepared for transmission to the receiver device 102B. Any portion(s) of the image that contain a restricted component(s) of the recognized object(s) will have been modified at the step 624 to obscure the restricted matter, whilst any portion(s) of the image that contain only non-restricted component(s) of the recognized object(s) are not obscured.

At step 628 the image may be further modified so that any area of it that does not contain the recognised object(s) is obscured, e.g. replaced by a blank/solid colour or blurred. The image is transmitted to the receiver device 102B and control can then loop back to step 614.

The skilled person will appreciate that embodiments of the components described herein can be implemented using any suitable software applications, programming languages, data editors, etc, and may be represented/stored/processed using any suitable data structures, and so on. It will also be understood that the steps described herein as part of the detailed embodiments may be re-ordered, omitted and/or repeated. Additional steps may also be performed. Some steps may be performed concurrently instead of sequentially.

Attention is directed to any papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A computer-implemented method of modifying images of an environment for storage or transmission, the method comprising:
receiving (204; 404; 604, 608) user input defining at least one selected feature of, or within, an environment;
capturing (212; 410; 614) an image of a portion of the environment using an image capture device;
identifying (216; 414; 618, 622) at least one object and/or at least one area in the image based on the at least one selected feature;
modifying (218; 416; 624) the image to include or exclude the at least one identified object and/or the at least one identified area, and
storing or transmitting (220; 418, 420; 626, 628) the modified image.

2. A method according to claim 1, wherein the selected feature comprises a user-defined area within the environment.

3. A method according to claim 2, wherein the user input defines boundaries of the user-defined area, and the step of modifying the image comprises:
determining (216; 622) whether the image contains at least part of at least one of the boundaries, and
adding (220; 628) a graphical component, such as a holographic wall, to the at least part of at least one of the boundaries to the image to obscure features located on a far side of the boundary with respect to a point of view of the image capture device.

4. A method according to any preceding claim, further comprising:
determining (316; 618) whether the image capture device is located within the user-defined area when the image is captured, and
if the device is not located within the user-defined area, modifying (217; 620) the image to obscure captured features.

5. A method according to claim 4, wherein the modifying (217; 620) the image to obscure the captured features comprises replacing the captured image with a blank image.

6. A method according to any preceding claim, wherein the selected feature comprises an object within the environment that is selected (404; 604) as a recognised object by a user, and the method further comprises:
accessing data representing a digital twin of the recognised object that includes data regarding a plurality of components of the recognized object, the data regarding the plurality of components indicating whether each of the plurality of components is restricted.

7. A method according to claim 6, wherein the digital twin data is updated whenever one of the plurality of components is added to, or removed from, the recognized object, and the method further comprises:
checking (414; 622), using the digital twin data, whether the image contains one or more of the components of the recognized object that are restricted, and
modifying (416; 624) the image to obscure the one or more restricted components.

8. A method according to claim 7, further comprising:
obscuring (420) any further area(s) of the image not containing the recognised object.

9. A method according to any preceding claim, comprising transmitting (220; 418, 420; 626, 628) the modified image to a second device as streamed video or via a video call.

10. A method according to claim 9, wherein the transmitted modified image is encrypted and/or compressed.

11. A method according to any preceding claim, wherein the environment comprises a secure environment containing hardware including a land, water or air vehicle.

12. A computer program product comprising instructions which, when the program is executed by a computer, cause the computer to carry out a method according to any of claims 1 to 11.

13. Apparatus (102A) configured to modify images of an environment for storage or transmission, the apparatus comprising:
an image capturing device (110A);
a communications interface (108B), and
a processor (102A),
wherein the processor is configured to:
receive user input defining at least one selected feature of, or within, an environment;
capture an image of a portion of the environment using the image capture device;
identify at least one object and/or at least one area in the image based on the at least one selected feature;
modify the image to include or exclude the at least one identified object and/or the at least one identified area, and
store or transmit the modified image.

14. Apparatus according to claim 12, wherein the apparatus (102A) comprises a Virtual Reality or Augmented Reality headset.

15. A system comprising:
a first apparatus (102A) according to claim 13 or 14, and
a second apparatus (102B) comprising a processor (104B), a communications interface (108B), and a display, the second apparatus configured to receive and display the modified image from the first apparatus.
